# EUROPÄISCHE PATENTSCHRIFT

(11) **EP 3 465 877 B1**
(45) Veröffentlichungstag und Bekanntmachung des Hinweises auf die Patenterteilung: **13.10.2021**
(21) Anmeldenummer: 17727495.8
(22) Anmeldetag: 08.05.2017
(51) Int. Cl.: H02K 1/27, H02K 1/28, H02K 15/03

(54) **ROTOR UND VERFAHREN ZUR HERSTELLUNG EINES ROTORS**
ROTOR AND METHOD FOR PRODUCING A ROTOR
ROTOR ET PROCÉDÉ DE FABRICATION D'UN ROTOR

(30) Priorität: 25.05.2016 DE 102016209174
(43) Veröffentlichungstag der Anmeldung: 10.04.2019
(73) Patentinhaber: Vitesco Technologies GmbH, 30165 Hannover (DE)
(72) Erfinder: SCHRÖDER, Lothar, 61184 Karben (DE)
(86) Internationale Anmeldenummer: PCT/EP2017/060933
(87) Internationale Veröffentlichungsnummer: WO 2017/202593

(56) Entgegenhaltungen:
- EP-A1- 2 793 365
- EP-A2- 2 892 128
- CN-U- 201 499 035
- DE-A1- 1 563 040
- DE-A1- 10 219 190
- DE-A1-102010 061 778
- DE-A1-102013 000 404
- US-A1- 2012 181 880

## Beschreibung

Die vorliegende Erfindung betrifft einen Rotor zur Verwendung in einem Elektromotor und ein Verfahren zur Herstellung eines derartigen Rotors.

Aus der DE 10 2012 221 422 A1 ist ein Rotor eines Elektromotors bekannt, der ein Ankerblechpaket aufweist, das aus einer Vielzahl gestanzter Bleche zusammengesetzt ist. Dieses Ankerblechpaket trägt einerseits am Umfang verteilt angeordnete Magnete und stellt andererseits das Bindeglied zu einer Welle dar, über die ein Drehmoment zu übertragen ist. Demnach stellt dieses Ankerblechpaket die mechanische Festigkeit sicher. Die Anordnung aus dem Ankerblechpaket und den einzelnen Magneten ist ferner mit einem Kunststoff umspritzt.

Aus der Druckschrift DE 1563040 A1 ist ein Rotor mit einer Anordnung von mehreren, Pole bildenden Ankerabschnitten und zwischen den Ankerabschnitten eingefassten Dauermagneten bekannt. Der Rotorkern ist dabei gänzlich aus einem Kunststoff gegossen oder gespritzt. Bei der Herstellung Rotorkerns werden zudem fingerartige Verankerungsmittel ausgebildet, die als solche am Rotorkern angeformt sind und sich jeweils von diesem in radialer Richtung erstrecken und dabei in eine vorgesehene Ausnehmung eines zugeordneten Ankerabschnitts hineinragen. Bei der Ausbildung des Kunstostoff-Rotorkerns und der jeweiligen fingerartigen Verankerungsmittel entsteht ein Formschluss zwischen den einzelnen Ankerabschnitten und den jeweils zugeordneten fingerartigen Verankerungsmitteln bzw. dem Kunstostoff-Rotorkern, den welchem die einzelnen Verankerungsmittel angeformt sind.

Aus der Druckschrift DE 10 2010 061 778 A1 ist ein sog. Speichenrotor bekannt, der dem Verankerungsprinzip der DE 1563040 A1 folgt.

Aus dem Stand der Technik sind ferner die Druckschriften EP 2793 365 A1, US 2012/181880 A1, EP 2 892 128 A2, DE 102 19 190 A1 und CN 201 499 035 U bekannt, aus denen jeweils verschiedene Bauformen von Rotoren eines Elektromotors hervorgehen.

Eine Aufgabe der vorliegenden Erfindung ist es, einen verbesserten Rotor bereitzustellen.

Diese Aufgabe wird durch den Anspruch 1 gelöst. Die Ansprüche 12, 13 und 14 stellen einen Elektromotor, einen Aktuator mit einem solchen Elektromotor und ein Fahrzeug mit einem solchen Aktuator und / oder Elektromotor unter Schutz. Der Anspruch 15 stellt ein Verfahren zur Herstellung eines derartigen Rotors unter Schutz. Vorteilhafte Ausführungsformen der Erfindung sind Gegenstand der Unteransprüche.

Es wird ein Rotor zur Verwendung in einem Elektromotor vorgeschlagen, wobei der Rotor mehrere Ankerabschnitte, mehrere Magnete, einen Rotorkern und eine Kunststoffumspritzung aufweist.

Der Rotorkern ist dabei durch die Kunststoffumspritzung aus Kunststoff ausgebildet. Dadurch entfallen die nach dem Stand der Technik, wie etwa in der DE 10 2012 221 422 A1, vorgesehenen radialen, metallischen Verbindungsabschnitte zur Welle. Der Kunststoff des Rotorkerns stellt somit die mechanische Festigkeit sicher.

Die Ankerabschnitte sind dabei als einzelne, separate Ankerblöcke ausgebildet, wobei die Ankerblöcke jeweils an ihrer einer Rotormittelachse zugewandten Innenseite mehrere ösenförmige Verankerungen aufweisen, die über die Länge eines zugeordneten Ankerblockes in gleichbleibenden Abständen zueinander verteilt angeordnet sind. Dabei sind all diese Verankerungen im umspritzten Zustand des Rotors von der Kunststoffmasse des Rotorkerns eingefasst. Diese Verankerungen bilden dabei einen soliden Formschluss zum umspritzten Kunststoff. Die Ankerblöcke, die aus einer Vielzahl von gestanzten Blechen zusammengesetzt sein können, können dabei zweckmäßigerweise identisch ausgeführt sein.

Indem die radialen, metallischen Verbindungsabschnitte, wie etwa in der DE 10 2012 221 422 A1, zur Welle wegfallen, verbessert sich auch ein magnetischer Fluss in einem solchen Rotor, weil der stattdessen aus einem Kunststoff ausgebildete Rotorkern als Verbindungsabschnitt den magnetischen Fluss nicht negativ beeinflusst. Ferner können die vorgeschlagenen, einzelnen Ankerblöcke vorteilhafterweise im Sinne eines optimalen magnetischen Flusses ausgestaltet werden.

Die Ankerblöcke und die Magnete sind dabei einzeln und abwechselnd zu einer im Wesentlichen ringförmigen Anordnung zusammengesetzt. Dabei kann zweckmäßigerweise ein Magnet zwischen jeweils zwei benachbarten Ankerblöcken angeordnet sein.

Diese ringförmige Anordnung lässt sich alternativ auch so beschreiben, als dass sie sich in einzelne Kreissegmente unterteilen lässt, wobei jedem dieser Kreissegmente entweder ein Ankerblock oder ein Magnet zugeordnet ist.

Bekanntlich sind nach dem Stand der Technik im besagten Ankerblechpaket am Umfang verteilt angeordnete Aufnahmeabschnitte vorgesehen, in welche die Magnete eingeschoben und dabei zerkratzt werden können.

Nach einer weiteren Ausführungsform wird eine solche Beschädigung vermieden, weil beim Verbau eines solchen Rotors die Ankerblöcke und die Magnete einzeln und vorteilhafterweise nacheinander abwechselnd zu der ringförmigen Anordnung zusammengesetzt sind. Dies wiederum begünstigt auch den magnetischen Fluss im Rotor.

Dies wird im Weiteren bei der Beschreibung des vorgeschlagenen Herstellungsverfahrens für einen solchen Rotor noch verdeutlicht werden.

Nach einer weiteren Ausführungsform ist durch die Kunststoffumspritzung ferner zumindest eine Stirnseite ausgebildet, die zusammen mit dem Rotorkern eine tragende und einstückige Spritzgussstruktur bildet. Die zumindest eine Stirnseite ergänzt die Fixierung der Magnete seitens des Rotorkerns, dessen Kunststoff sich zweckmäßigerweise bis zu den einzelnen Magneten erstreckt und diese somit auch fixiert.

Nach einer weiteren Ausführungsform sind durch die Kunststoffumspritzung ferner einzelne Spritzgussabschnitte ausgebildet, die an der Außenseite des Rotors angeordnete Nuten ausfüllen und die Nuten nach außen hin abdecken. Die Nuten sind dabei durch jeweils zwei benachbarte Ankerblöcke in Verbindung mit dem dazwischen angeordneten Magneten gebildet, wobei die Spritzgussabschnitte zusammen mit dem Rotorkern und der Stirnseite die tragende und einstückige Spritzgussstruktur bilden. Diese einzelnen Spritzgussabschnitte ergänzen die Fixierung der Magnete seitens des Rotorkerns und der zumindest einen Stirnseite. Ferner können diese einzelnen Spritzgussabschnitte derart ausgebildet sein, als dass sie bündig zu den Außenflächen der jeweiligen Ankerblöcke und / oder der zumindest einen Stirnseite abschließen.

Die an den einzelnen Ankerblöcken ausgebildeten, ösenförmigen Verankerungsmittel können dabei, etwa in der Gestalt eines Halbringes oder in der Gestalt eines im Wesentlichen ausgebildeten Vollrings ausgebildet sein. Zusätzlich oder alternativ dazu können die Verankerungsmittel auch andere Ausgestaltungen aufweisen, die etwa unter die Bezeichnung Ösenform fallen, etwa eine teilkreisförmige Ausbildung. Es sind grundsätzlich aber auch andere Verankerungsformen bzw. Verankerungsgeometrien denkbar, so z.B. auch rippenförmige Verankerungsmittel, die in den Kunststoffkörper des Rotorkerns hineinragen. Auch ist eine Kombination von ösenförmigen Verankerungsformen neben anderen Verankerungsformen denkbar, etwa in der Gestalt von stift- und / oder hakenförmigen Verankerungsformen. All diese verschiedenen Verankerungsformen gewährleisten einen sicheren Formschluss zum umspritzten Kunststoff und somit eine sichere Verankerung der einzelnen Ankerblöcke mit dem Kunststoffkörper des Rotorkerns. Solange ein solch sicherer Formschluss gewährleistet ist, kann die Verankerungsform bzw. Verankerungsgeometrie beliebig ausgebildet sein.

Zu Montage- bzw. Herstellungszwecken weisen die Ankerblöcke jeweils zumindest eine Aussparung in Längsrichtung der ringförmigen Anordnung auf, wobei sich die Aussparung von Stirnseite zu Stirnseite des Ankerblocks erstrecken kann, d.h. dass die Aussparung den Ankerblock in dessen Längsrichtung durchdringt. Zusätzlich oder alternativ dazu könnte sich eine solche Aussparung auch über eine Teillänge des Ankerblocks, d.h. nur zum Teil in den Ankerblock erstrecken. Dabei kann die Aussparung im Wesentlichen mittig am Ankerblock angeordnet sein.

Nach einer weiteren Ausführungsform weisen zwei benachbarte Ankerblöcke an den einander zugewandten Seiten radial außen- und innenseitig bezüglich der ringförmigen Anordnung zumindest je eine Nase auf, die den dazwischen angeordneten Magneten einfasst und fixiert.

Die Nasen erstrecken sich dabei in Längsrichtung der ringförmigen Anordnung jeweils zumindest über einen Längsabschnitt des zugeordneten Ankerblocks oder alternativ dazu über die ganze Länge des zugeordneten Ankerblocks.

Die einzelnen Ankerblöcke sind dabei zumindest aus einem gestanzten Blech ausgebildet, vorzugsweise aus einer Vielzahl solcher gestanzten Bleche zusammengesetzt. Die Ankerblöcke können aber grundsätzlich auch aus einem Vollmaterial ausgebildet sein. In jedem Fall kann ein entsprechender Blechschnitt bzw. eine entsprechende Ausbildung der einzelnen Ankerblöcke auf eine Optimierung des magnetischen Flusses hin ausgelegt sein, da die Verbindung zu einer Welle mittels des Rotorkerns aus Kunststoff sichergestellt ist.

Zur Gewichtseinsparung kann der Rotorkern über den Umfang verteilt angeordnete Aussparungen aufweisen, die sich zweckmäßigerweise über ganze Länge des Rotorkerns, d.h. von Stirnseite zu Stirnseite des Rotorkerns erstrecken können. Zusätzlich oder alternativ dazu kann sich zumindest eine solche Aussparung auch über eine Teillänge des Rotorkerns, d.h. nur zum Teil in den Rotorkern erstrecken. Diese Aussparungen können dabei zweckmäßigerweise gleichmäßig über den Umfang verteilt und gleichmäßig zueinander beabstandet sein.

Auch die Stirnseite des Rotors kann im Bereich bzw. auf der Höhe der Ankerblöcke und der Magnete über den Umfang verteilt angeordnete Aussparungen aufweisen, wobei einige dieser Aussparungen der Stirnseite zu den Aussparungen der Ankerblöcke korrespondieren können, d.h. dass diese Aussparungen der Stirnseite im Wesentlichen zu den Aussparungen der Ankerblöcke fluchten. Dies bedingt eine Materialeinsparung bei der Umspritzung der ringförmigen Anordnung.

Es wird ferner ein Elektromotor zur Verwendung in einem Aktuator und / oder in einem Fahrzeug vorgeschlagen, wobei der Elektromotor einen Rotor der zuvor beschriebenen Art aufweist.

Ferner wird ein Aktuator mit einem Elektromotor der zuvor beschriebenen Art vorgeschlagen, etwa zur Anwendung bei elektrischen Ölpumpen, Kühlwasserpumpen, Kupplungsstellern, und / oder Getriebestellern. Auch ist zum Beispiel eine Anwendung in einem Drosselklappensteller denkbar.

Außerdem wird ein Fahrzeug mit einem Aktuator und / oder einem Elektromotor der zuvor beschriebenen Art vorgeschlagen.

Des Weiteren wird ein Verfahren zur Herstellung eines Rotors der zuvor beschriebenen Art vorgeschlagen, bei dem **in einem ersten Schritt** mittels eines Montagetisches als einzelne Ankerblöcke ausgebildete Ankerabschnitte und einzelne Magnete zu einer im Wesentlichen ringförmigen Anordnung zusammengesetzt werden.

Bei dem Verfahren wird ferner **in einem zweiten Schritt** eine tragende Kunststoffstruktur durch eine Kunststoffumspritzung hinzugefügt. Dabei wird ein Rotorkern aus Kunststoff ausgebildet, in dem die einzelnen Ankerblöcke an ihrer einer Rotormittelachse zugewandten Innenseite mittels mehrerer Verankerungen verankert werden, die über die Länge eines zugeordneten Ankerblockes in gleichbleibenden Abständen zueinander verteilt angeordnet sind, wobei all diese Verankerungen bei der Kunststoffumspritzung von der Kunststoffmasse des Rotorkerns eingefasst werden.

Dabei werden die einzelnen Ankerblöcke über eigens dafür vorgesehene eigene Aussparungen zur Fixierung auf im Montagetisch angebrachte Fixierstifte gesteckt. Dies ermöglicht die bereits zuvor beschriebene Unterteilung der ringförmigen Anordnung in einzelne Kreissegmente, die entweder einem Ankerblock oder einem Magnet zugeordnet sind.

Die Fixierstifte korrespondieren dabei bezüglich ihrer Querschnittsform zweckmäßigerweise zumindest im Wesentlichen zu den Aussparungen der jeweils zugeordneten Ankerblöcke, wobei die Aussparungen der Ankerblöcke z.B. schlitzförmig ausgebildet sein können.

Nach einer Ausführungsform werden die einzelnen Ankerblöcke und Magnete abwechselnd zu der ringförmigen Anordnung zusammengesetzt. Dies begünstigt einen magnetischen Fluss in einem solchen Rotor.

Nach einer weiteren Ausführungsform werden die einzelnen Ankerblöcke und Magnete nacheinander abwechselnd zu der ringförmigen Anordnung zusammengesetzt. Dadurch vermeidet man ein Einschieben der einzelnen Magnete zwischen zwei benachbarte Ankerblöcke. Somit vermeidet man auch eine Beschädigung der Magnetoberflächen, wie man sie aus dem Stand der Technik kennt. Dies wiederum begünstigt auch den magnetischen Fluss im Rotor. Nach einer weiteren Ausführungsform wird zwischen zwei benachbarten Ankerblöcken ein Magnet angeordnet. Dadurch wird eine spätere Korrosion vermieden.

Die Magnete können grundsätzlich entweder vor dem Verbau oder alternativ nach dem Verbau magnetisiert werden.

Bei der Kunststoffumspritzung wird ferner zumindest eine Stirnseite ausgebildet, die zusammen mit dem Rotorkern eine tragende und einstückige Kunststoffstruktur bildet. Die zumindest eine Stirnseite ergänzt die Fixierung der Magnete seitens des Rotorkerns.

Ferner werden bei der Kunststoffumspritzung einzelne Spritzgussabschnitte ausgebildet, welche Nuten an der Außenseite des Rotors, die durch jeweils zwei benachbarte Ankerblöcke in Verbindung mit dem dazwischen angeordneten Magneten gebildet werden, ausfüllen und nach außen hin abdecken. Dabei bilden die jeweiligen Spritzgussabschnitte zusammen mit dem Rotorkern und der Stirnseite die tragende und einstückige Kunststoffstruktur. Diese einzelnen Spritzgussabschnitte ergänzen die Fixierung der Magnete seitens des Rotorkerns und der zumindest einen Stirnseite. Ferner können diese einzelnen Spritzgussabschnitte derart ausgebildet sein, als dass sie bezüglich der ringförmigen Anordnung bündig zu den Außenflächen der jeweiligen Magnete abschließen.

Nach einer weiteren Ausführungsform kann der Montagetisch grundsätzlich zwei- oder mehrgeteilt ausgebildet sein, um zwei oder mehrere Montagetischteile mit einzeln zusammengesetzten Ankerblöcken und Magneten komplementär vormontieren zu können, wobei die vormontierten Montagetischteile dann zur Bildung der ringförmigen Anordnung zusammengesetzt werden.

Grundsätzlich kann die final ausgebildete Kunststoffstruktur bündig abschließend mit den jeweiligen Außenflächen der Ankerblöcke ausgebildet werden, um Absätze zu vermeiden.

Bei der Ausbildung der Kunststoffstruktur kann auch eine Welle und / oder eine Nabe mitumspritzt werden.

Schließlich wird nach einer Aushärtung der Kunststoffstruktur **in einem dritten und letzten Schritt** der Rotor von den Fixierstiften des Montagetisches abgezogen und anschließend einer entsprechend verwendeten Spritzgussform entnommen.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung.

Hierzu zeigen:
- Fig.1: eine perspektivische Darstellung eines Rotors mit einer spritzgusstechnisch ausgebildeten, tragenden Kunststoffstruktur,
- Fig.2: den in Fig. 1 dargestellten Rotor in einer Schnittdarstellung entlang der Linie X - X,
- Fig.3: einen ersten Montagetisch mit Ankerblöcken und Magneten,
- Fig.4: eine zweiten Montagetisch mit Ankerblöcken und Magneten und
- Fig.5: eine weitere perspektive Darstellung eines Rotors mit einer spritzgusstechnisch ausgebildeten, tragenden Kunststoffstruktur.

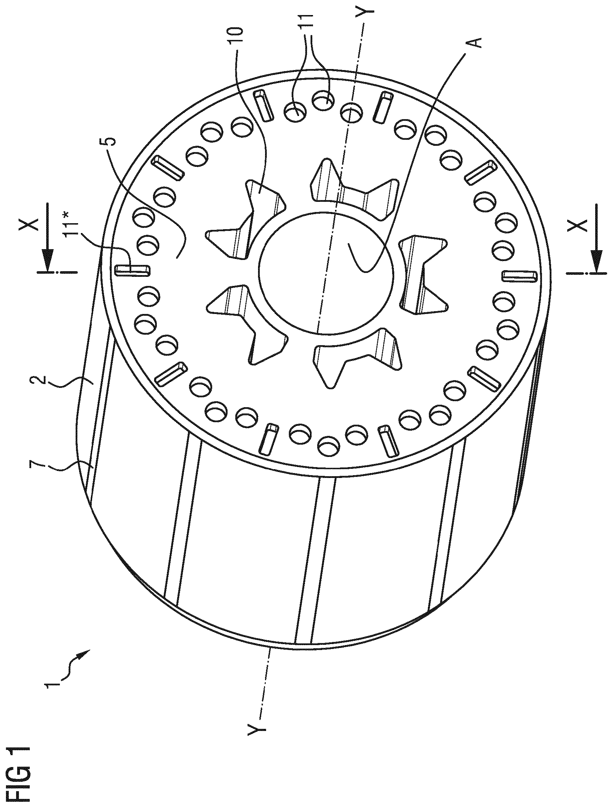

Fig. 1 zeigt einen Rotor 1 eines Elektromotors zur Verwendung in einem Aktuator und / oder zur Verwendung als Antrieb für z.B. eine Öl- und / oder Kühlwasserpumpe, eine elektrische BremskraftVerstärkung, einen variablen Ventiltrieb, einen Kupplungs- und / oder einen Getriebesteller und dergleichen. Der Rotor 1, der eine hier nicht dargestellte Welle zur Einführung in eine Aufnahme A umfassen kann, ist dabei spritzgusstechnisch ausgebildet. Der Rotor 1 weist beispielhaft eine Anordnung von insgesamt zehn Ankerblöcken 2 und zehn Magneten 3 auf.

Grundsätzlich sein an dieser Stelle bemerkt, dass die Anzahl von Ankerblöcken 2 und Magneten 3 - je nach Auslegung eines Motors - beliebig sein kann. Die einzelnen Ankerblöcke 2 stellen Ankerblechpakete bzw. Ankerabschnitte dar, die aus einer Vielzahl von gestanzten Blechen zusammengesetzt sind.

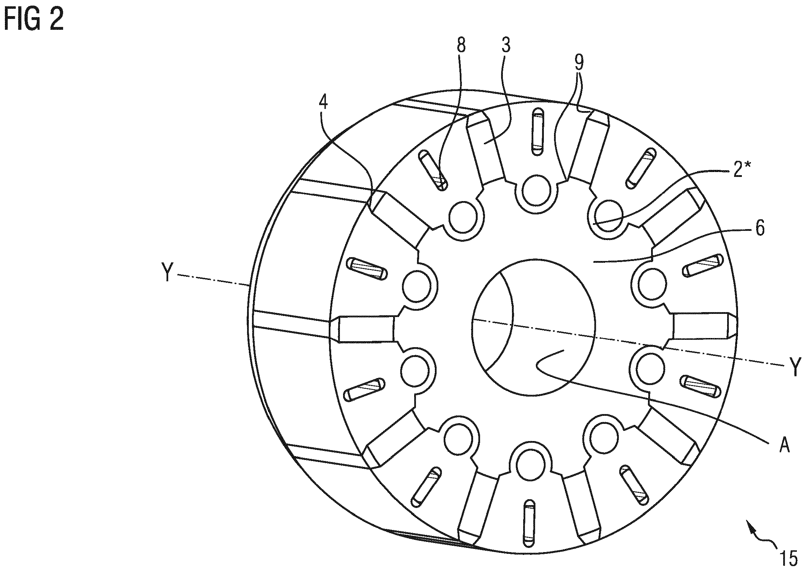

Die Ankerblöcke 2 und die Magnete 3 sind dabei einzeln und abwechselnd zu einer im Wesentlichen ringförmigen Anordnung zusammengesetzt (vgl. Fig. 2). Zwischen zwei benachbarten Ankerblöcken 2 ist dabei jeweils ein Magnet 3 angeordnet.

An den aneinander zugewandten Seiten zweier benachbarter Ankerblöcke 2 ist jeweils radial außen- und innenseitig bezüglich der ringförmigen Anordnung eine Nase 4 ausgebildet, die den jeweils zugeordneten Magneten 3 einfasst und fixiert. Die einzelnen Nasen 4 sind dabei innenseitig angefast, wobei sie sich in Umfangsrichtung der ringförmigen Anordnung 15 verjüngen. Dies vereinfacht eine Zusammensetzung der Ankerblöcke 2 mit den Magneten 3 bei der Montage. Die einzelnen Nasen 4 erstrecken sich dabei über die gesamte Länge des jeweils zugeordneten Ankerblocks 2.

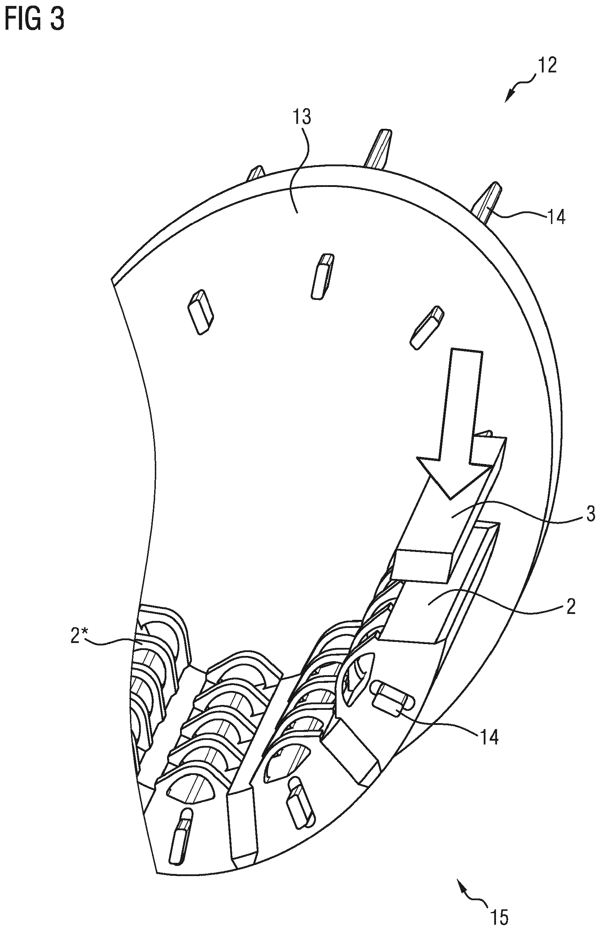

Die einzelnen Ankerblöcke 2 weisen an ihrer der Rotormittelachse Y - Y zugewandten Innenseite insgesamt mehrere ösenförmig ausgebildete Verankerungen 2* in der Gestalt von Vollringen auf, die im Rotorkern 6 bzw. der Spritzgussmasse des Rotorkerns 2 fest verankert sind (Fig. 2). Diese Verankerungen 2* sind in Längsrichtung (Y - Y) des Rotors 1 über die Länge eines Ankerblockes 2 in gleichbleibenden Abständen zueinander verteilt angeordnet. Alternativ dazu können diese Verankerungen 2* auch teilkreisförmig bzw. bogenförmig ausgebildet sein (vgl. Fig. 3, Fig. 4, Fig. 5). In Fig. 3 sind insgesamt fünf ösenförmige Verankerungen 2* an jedem der Ankerblöcke 2 vorgesehen. All diese Verankerungen 2* sind im umspritzten Zustand des Rotors 1 (Fig. 1, Fig. 2, Fig. 5) von der Kunststoffmasse bzw. Spritzgussmasse des Rotorkerns 2 eingefasst bzw. durchdrungen, so dass sie einen soliden Formschluss mit dem Rotorkern 6 bilden.

Jeder einzelne Ankerblock 2 weist eine Aussparung 8 auf, die Montagezwecken dient und die im Wesentlichen mittig am Ankerblock 2 angeordnet und schlitzförmig ausgebildet ist. Diese Aussparung 8 dient der Aufnahme eines sogenannten Fixierstiftes 14, auf den im Folgenden im Zusammenhang mit einem Montage- bzw. Herstellungsverfahren noch eingegangen wird.

Der Rotorkern 6 umfasst insgesamt fünf über den Umfang verteilt angeordnete Aussparungen 10 (Fig. 1), um an Gewicht einzusparen. Diese Aussparungen 10 sind dabei zweckmäßigerweise gleichmäßig zueinander beabstandet angeordnet.

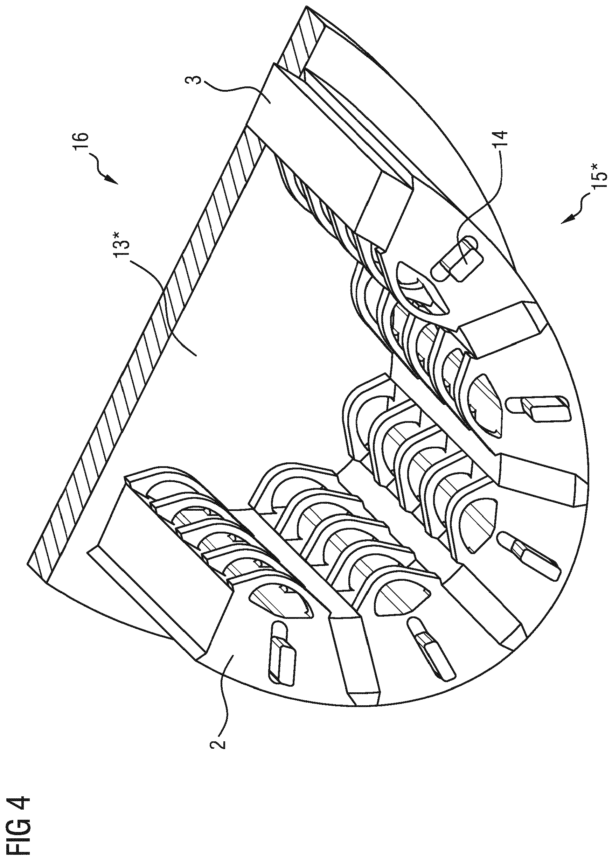

Der Rotor 1 umfasst ferner zwei spritzgusstechnisch ausgebildete Stirnseiten 5, die zusammen mit dem umspritzten Rotorkern 6 eine tragende und einstückige Spritzgussstruktur bilden. Diese beiden Stirnseiten 5 fixieren die einzelnen Magnete 3 zusätzlich neben der an sich schon fixierend wirkenden Kunststoffmasse des Rotorkerns 6, die sich bis zu den einzelnen Magneten 3 erstreckt. Ferner weisen diese beiden Stirnseiten 5 jeweils im Bereich bzw. auf der Höhe der Ankerblöcke 2 und der Magnete 3 ein gleichmäßiges Muster von Aussparungen 11, 11* auf, die der Gewichtsreduktion dienen. Einige dieser Aussparungen 11* korrespondieren dabei zu den Aussparungen 8 der Ankerblöcke 2, durch die sich jeweils einer der Fixierstifte 14 zu Montagezwecken erstreckt (vgl. Fig.3, Fig.4) .

Die an der Außenseite des Rotors 1 zwischen jeweils zwei benachbarten Ankerblöcken 2 gebildeten Nuten 4, die durch die beiden Ankerblöcke 2 und dem dazwischen angeordneten Magneten 3 gebildet sind, sind auch mittels der Spritzgussmasse ausgefüllt (Fig. 1, Fig. 2) . Die einzelnen die jeweiligen Nuten 4 nach außen hin abdeckenden Spritzgussabschnitte 7 sind dabei einstückig mit dem umspritzten Rotorkern 6 und den beiden umspritzten Stirnseiten 5 verbunden, und sind somit Bestandteil der tragenden Spritzgussstruktur. Diese einzelnen Spritzgussabschnitte 7 fixieren die einzelnen Magnete 3 zusätzlich in radialer Richtung neben der an sich schon fixierend wirkenden Kunststoffmasse des Rotorkerns 6 und der beiden Stirnseiten 5.

In diesem Ausführungsbeispiel ist die tragende Spritzguss- bzw. Kunststoffstruktur bündig abschließend mit den jeweiligen Außenflächen der Ankerblöcke 2 ausgebildet, um Absätze zu vermeiden.

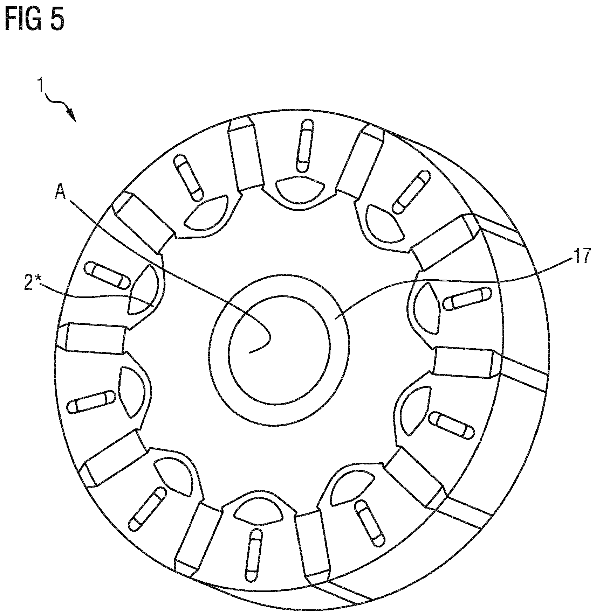

Auch die zuvor genannte - hier nicht dargestellte - Welle, die in die Aufnahme A einführbar ist, kann bei der Kunststoffumspritzung mitumspritzt werden, d.h. dass die Spritzgussstruktur direkt auf die Welle aufgebracht wird (Fig.l, Fig. 2) . Alternativ dazu kann auch eine Nabe 17 mitumspritzt werden, welche die Aufnahme A für die Welle bildet (Fig. 5) . Alternativ dazu kann eine solche Nabe 17 aber auch nachträglich mit der Spritzgussstruktur bzw. dem Rotorkern 6 verpresst werden. Die Nabe 17 wiederum kann dann ihrerseits form- oder kraftschlüssig mit der Welle verbunden werden.

Zur Herstellung des Rotors 1 werden in den gezeigten Ausführungsbeispielen beispielhaft insgesamt zehn Ankerblöcke 2 und zehn Magnete 3 verwendet. Grundsätzlich ist die Anzahl der verwendeten Ankerblöcke und Magnete frei wählbar.

**In einem ersten Schritt** werden die einzelnen Ankerblöcke 2 und die einzelnen Magnete 3 unter Verwendung eines z.B. drehbaren Montagetisches bzw. Revolvertisches 12 nacheinander abwechselnd zu einer im Wesentlichen ringförmigen Anordnung 15 zusammengesetzt. Dabei werden die einzelnen Ankerblöcke 2 über eigens dafür vorgesehene eigene Aussparungen 8 auf in einer Montageplatte 13 angebrachte Fixierstifte 14 aufgesteckt, welche die Ankerblöcke auf dem Montagetisch fixieren und halten. Grundsätzlich ist es vorteilhaft, die einzelnen Ankerblöcke 2 und die einzelnen Magnete 3 nacheinander zusammen zu setzten, weil dadurch ein schonender Verbau der Magnete 3 sichergestellt ist, ohne dass die Magnetoberflächen zerkratzt werden. Alternativ dazu ließen sich auch die einzelnen Ankerblöcke 2 vormontieren und die Magnete 3 anschließend in die gebildeten Aufnahmespalte einführen bzw. einschieben. Dies hätte aber den Nachteil, dass die Magnetoberflächen zerkratzt werden könnten, wodurch eine Korrosion in einem solchen Rotor 1 begünstigt wird.

Die einzelnen nacheinander aufgesetzten Magnete 3 werden dabei durch zwei benachbarte Ankerblöcke 2 mittels der Nasen 9 eingefasst und fixiert. Jeder dieser Magnete 3 ist zwischen zwei benachbarten Ankerblöcken 2 angeordnet.

**In einem zweiten Schritt** wird nun durch einen Spritzgussvorgang bzw. eine Kunststoffumspritzung die tragende Spritzgussstruktur hinzugefügt, welche den Rotorkern 6 umfasst und welche die einzelnen Verankerungsmittel bzw. Verankerungen 2* in der Gestalt von ösenförmigen bzw. bogenförmigen Verankerungen durchdringt und einfasst. Die Spritzgussstruktur und die ringförmige Anordnung 15 sind somit im Ergebnis fest miteinander verbunden und nicht mehr zerstörungsfrei voneinander lösbar. Die einzelnen Verankerungen 2* bilden einen festen Formschluss mit dem Kunststoff des Rotorkerns 6.

In einer Ausführungsform umfasst die tragende Spritzgussstruktur den Rotorkern 6, der sich bis zu den Ankerblöcken 2 und den Magneten 3 erstreckt, wobei die einzelnen Ankerblöcke 2 mittels der zugeordneten Verankerungen 2* in dem Rotorkern 6 fest verankert sind. In dieser Ausführungsform trägt der Rotorkern 6 die Ankerblöcke 2 direkt und die Magnete 3 sowohl direkt als auch indirekt (vgl. Fig. 2, Fig. 5).

Eine solch tragende Spritzgussstruktur, die einen Rotorkern 6 aus Kunststoff vorsieht, an dem keine metallischen Verbindungsabschnitte bzw. Ankerblechpaketabschnitte zur Welle wie im Stand der Technik ausgebildet sind, verbessert einen magnetischen Fluss in einem solchen Rotor, weil die seitens dieser metallischen Verbindungsabschnitte bekanntlich verursachten Verluste des magnetischen Flusses ausbleiben.

In einer weiteren Ausführungsform umfasst die tragende Spritzgussstruktur sowohl den Rotorkern 6 als auch zwei Stirnseiten 5 sowie an der Außenseite des Rotors 1 angeordnete Spritzgussabschnitte 7 zur Abdeckung der Nuten 4, die jeweils zwischen zwei benachbarten Ankerblöcken 2 in Verbindung mit dem dazwischen liegenden bzw. angeordneten Magneten 3 gebildet werden (Fig. 1, Fig. 2, Fig. 5). Diese Spritzgussabschnitte 7 schließen dabei bündig mit der Außenseite der Ankerblöcke 2 ab.

Grundsätzlich kann der Montagetisch 12, 16 auch z.B. zweigeteilt ausgeführt sein (Fig. 3, Fig. 4). Auch bei den beiden Montagetischhälften 16 kann es sich dabei um je einen drehbaren Montagetisch bzw. Revolvertisch handeln (Fig. 4) . In diesem Fall werden zwei separate Montageplatten 13*, die mit je fünf Fixierstiften 14 bestückt sind, in der zuvor beschriebenen Weise mit den Ankerblöcken 2 und den Magneten 3 bestückt. Im Ergebnis erhält man somit zwei vormontierte Montagetischhälften 16 mit je einer komplementären, halbringförmigen Anordnung 15* von Ankerblöcken 2 und Magneten 3 (Fig. 4), wobei die beiden Montagetischhälften 16 schließlich in dem ersten Schritt zur Bildung der ringförmigen Anordnung 15 zusammengesetzt werden. Anschließend wird dann in einem zweiten Schritt die tragende Spritzgussstruktur zur ringförmigen Anordnung hinzugefügt. Dabei kann auch die Nabe 17 zur Aufnahme der - hier nicht dargestellten - Welle mitvergossen werden (Fig. 5).

Nach dem Spritzgussvorgang und nachdem die Kunststoffmasse erstarrt ist, kann der Rotor 1 schließlich **in einem dritten und letzten Schritt** von den Fixierstiften 14 der Montageplatte 13, 13* abgezogen und einer entsprechend verwendeten - hier nicht dargestellten - Spritzgussform entnommen werden.

Der zuvor beschriebene Rotor 1 als Teil eines Elektromotors wird im Rahmen dieser Anmeldung zum Beispiel zur Verwendung in verschiedenen Pumpenantrieben, etwa eines Kraftfahrzeugs vorgeschlagen. Grundsätzlich eignet sich aber ein solcher Rotor 1 als Teil eines Elektromotors auch für anderweitige bzw. verschiedenste Verwendungen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

## Patentansprüche

1. **Rotor** eines Elektromotors, mit
mehreren Ankerabschnitten, die als einzelne, separate Ankerblöcke (2) ausgebildet sind,
mehreren Magneten (3),
wobei die Ankerblöcke (2) und die Magnete (3) einzeln und abwechselnd zu einer im Wesentlichen ringförmigen Anordnung (15) zusammengesetzt sind und wobei ein Magnet (3) zwischen jeweils zwei benachbarten Ankerblöcken (2) angeordnet ist, einem Rotorkern (6) und
einer Kunststoffumspritzung,
wobei der Rotorkern (6) durch die Kunststoffumspritzung aus Kunststoff ausgebildet ist,
**dadurch gekennzeichnet, dass**
die einzelnen Ankerblöcke (2) an ihrer einer Rotormittelachse (Y - Y) zugewandten Innenseite mehrere ösenförmige Verankerungen (2*) aufweisen, die über die Länge eines zugeordneten Ankerblockes (2) in gleichbleibenden Abständen zueinander verteilt angeordnet sind, wobei all diese Verankerungen (2*) im umspritzten Zustand des Rotors 1 von der Kunststoffmasse des Rotorkerns (6) eingefasst sind, so dass sie einen soliden Formschluss mit dem Rotorkern (6) bilden.

2. Rotor nach Anspruch 1 **dadurch gekennzeichnet, dass** durch die Kunststoffumspritzung ferner zumindest eine Stirnseite (5) ausgebildet ist, die zusammen mit dem Rotorkern (6) eine tragende und einstückige Spritzgussstruktur bildet.

3. Rotor nach Anspruch 1 oder 2, **dadurch gekennzeichnet, dass** durch die Kunststoffumspritzung ferner einzelne Spritzgussabschnitte (7) ausgebildet sind, die an der Außenseite des Rotors (1) angeordnete Nuten (4) ausfüllen und die Nuten (4) nach außen hin abdecken, wobei die Nuten (4) durch jeweils zwei benachbarte Ankerblöcke (2) in Verbindung mit dem dazwischen angeordneten Magneten (3) gebildet sind, wobei die Spritzgussabschnitte (7) zusammen mit dem Rotorkern (6) und der Stirnseite (5) die tragende und einstückige Spritzgussstruktur bilden.

4. Rotor nach einem der vorhergehenden Ansprüche, **dadurch gekennzeichnet, dass** das Verankerungsmittel (2*) ösenförmig ausgebildet ist.

5. Rotor nach einem der vorhergehenden Ansprüche, **dadurch gekennzeichnet, dass** die Ankerblöcke (2) jeweils eine Aussparung (8) aufweisen, die sich in Längsrichtung der ringförmigen Anordnung (15) zumindest über eine Teillänge des Ankerblocks (2), vorzugsweise über die ganze Länge Ankerblocks (2) erstreckt.

6. Rotor nach Anspruch 5, **dadurch gekennzeichnet, dass** die Aussparung (8) im Wesentlichen mittig am Ankerblock (2) angeordnet ist.

7. Rotor nach einem der vorhergehenden Ansprüche, **dadurch gekennzeichnet, dass** zwei benachbarte Ankerblöcke (2) an den einander zugewandten Seiten radial außen- und innenseitig bezüglich der ringförmigen Anordnung (15) zumindest je eine Nase (9) aufweisen, die den dazwischen angeordneten Magneten (3) einfasst.

8. Rotor nach Anspruch 7, **dadurch gekennzeichnet, dass** sich die Nasen (9) in Längsrichtung der ringförmigen Anordnung (15) jeweils zumindest über einen Längsabschnitt des Ankerblocks (2), vorzugsweise über die ganze Länge des Ankerblocks (2) erstrecken.

9. Rotor nach einem der vorhergehenden Ansprüche, **dadurch gekennzeichnet, dass** jeder der Ankerblöcke (2) aus einer Vielzahl von gestanzten Blechen ausgebildet ist, die zu dem Ankerblock (2) zusammengesetzt sind.

10. Rotor nach einem der vorhergehenden Ansprüche, **dadurch gekennzeichnet, dass** der Rotorkern (6) über den Umfang verteilt angeordnete Aussparungen (10) zur Gewichtseinsparung aufweist.

11. Rotor nach einem der vorhergehenden Ansprüche, **dadurch gekennzeichnet, dass** die Stirnseite (5) des Rotors (1) im Bereich der Ankerblöcke (2) und der Magnete (3) über den Umfang verteilt angeordnete Aussparungen (11, 11*) aufweist, wobei einige der Aussparungen (11*) der Stirnseite (5) zu den Aussparungen (8) der Ankerblöcke (2) korrespondieren.

12. **Elektromotor** zur Verwendung in einem Drosselklappensteller für einen Verbrennungsmotor, wobei der Elektromotor einen Rotor (1) nach einem der Ansprüche 1 bis 11 aufweist.

13. **Aktuator** mit einem Elektromotor nach Anspruch 12.

14. **Fahrzeug** mit einem Aktuator nach Anspruch 13 oder einem **Elektromotor** nach Anspruch 12.

15. **Verfahren zur Herstellung eines Rotors** nach einem der Ansprüche 1 bis 11, bei dem **in einem ersten Schritt** mittels eines Montagetisches (12) als einzelne Ankerblöcke (2) ausgebildete Ankerabschnitte und einzelne Magnete (3) zu einer im Wesentlichen ringförmigen Anordnung (15) zusammengesetzt werden, wobei die einzelnen Ankerblöcke (2) und Magnete (3) abwechselnd zu der ringförmigen Anordnung (15) zusammengesetzt werden, wobei zwischen zwei benachbarten Ankerblöcken (2) ein Magnet (3) angeordnet wird
und
bei dem **in einem zweiten Schritt** eine tragende Kunststoffstruktur durch eine Kunststoffumspritzung hinzugefügt wird, wobei ein Rotorkern (6) aus Kunststoff ausgebildet wird, in dem die einzelnen Ankerblöcke (2) an ihrer einer Rotormittelachse (Y - Y) zugewandten Innenseite mittels mehrerer Verankerungen (2*) verankert werden, die über die Länge eines zugeordneten Ankerblockes (2) in gleichbleibenden Abständen zueinander verteilt angeordnet sind, wobei all diese Verankerungen (2*) bei der Kunststoffumspritzung von der Kunststoffmasse des Rotorkerns 2 eingefasst werden.

16. Verfahren nach Anspruch 15, wobei die einzelnen Ankerblöcke (2) zur Fixierung auf im Montagetisch (12) angebrachte Fixierstifte (14) gesteckt werden.

17. Verfahren nach Anspruch 15 oder 16, wobei die einzelnen Ankerblöcke (2) und Magnete (3) nacheinander abwechselnd zu der ringförmigen Anordnung (15) zusammengesetzt werden.

18. Verfahren nach einem der Ansprüche 15 bis 17, wobei durch die Kunststoffumspritzung ferner zumindest eine Stirnseite (5) ausgebildet wird, die zusammen mit dem Rotorkern (6) eine tragende und einstückige Kunststoffstruktur bildet.

19. Verfahren nach Anspruch 18, wobei durch die Kunststoffumspritzung ferner einzelne Spritzgussabschnitte (7) ausgebildet werden, welche Nuten (4) an der Außenseite des Rotors (1), die durch jeweils zwei benachbarte Ankerblöcke (2) in Verbindung mit dem dazwischen angeordneten Magneten (3) gebildet werden, ausfüllen und nach außen hin abdecken, wobei die jeweiligen Spritzgussabschnitte (7) zusammen mit dem Rotorkern (6) und der Stirnseite (5) die tragende und einstückige Kunststoffstruktur bilden.

20. Verfahren nach einem der Ansprüche 15 bis 19, wobei der Montagetisch (12) zwei- oder mehrgeteilt ausgebildet wird, um zwei oder mehrere Montagetischteile (16) mit einzeln zusammengesetzten Ankerblöcken (2) und Magneten (3) komplementär vorzumontieren, wobei die vormontierten Montagetischteile (16) zur Bildung der ringförmigen Anordnung (15) zusammengesetzt werden.

21. Verfahren nach einem der vorhergehenden Ansprüche, wobei die ausgebildete Kunststoffstruktur bündig mit den jeweiligen Außenseiten der Ankerblöcke (2) abschließt.

22. Verfahren nach einem der vorhergehenden Ansprüche, wobei bei der Ausbildung der Kunststoffstruktur eine Welle und / oder eine Nabe (17) mitumspritzt wird.

23. Verfahren nach einem der vorhergehenden Ansprüche, wobei nach einer Aushärtung der Kunststoffstruktur **in einem dritten Schritt** der Rotor (1) vom Montagetisch (12) abgezogen und anschließend einer entsprechend verwendeten Spritzgussform entnommen wird.

## Claims

1. Rotor of an electric motor, comprising a plurality of armature sections which are designed as individual, separate armature blocks (2),
a plurality of magnets (3),
wherein the armature blocks (2) and the magnets (3) are individually and alternately put together to form a substantially annular arrangement (15) and wherein a magnet (3) is arranged between in each case two adjacent armature blocks (2),
a rotor core (6) and
a plastic encapsulation,
wherein the rotor core (6) is formed by the plastic encapsulation from plastic,
**characterized in that**
the individual armature blocks (2), on their inner side which faces a rotor centre axis (Y-Y), have a plurality of eyelet-like anchoring means (2*) which are arranged in a manner distributed at equal distances in relation to one another over the length of an associated armature block (2), wherein, in the encapsulated state of the rotor 1, all of these anchoring arrangements (2*) are surrounded by the plastic compound of the rotor core (6), so that they form a solid interlocking connection with the rotor core (6).

2. Rotor according to Claim 1, **characterized in that** at least one end side (5) is further formed by the plastic encapsulation, said end side, together with the rotor core (6), forming a supporting and integral injection-moulded structure.

3. Rotor according to Claim 1 or 2, **characterized in that** individual injection-moulded sections (7) are further formed by the plastic encapsulation, said individual injection-moulded sections filling slots (4) which are arranged on the outer side of the rotor (1) and covering the slots (4) with respect to the outside, wherein the slots (4) are formed by in each case two adjacent armature blocks (2) in conjunction with the magnet (3) which is arranged between them, wherein the injection-moulded sections (7), together with the rotor core (6) and the end side (5), form the supporting and integral injection-moulded structure.

4. Rotor according to one of the preceding claims, **characterized in that** the anchoring means (2*) is of eyelet-like form.

5. Rotor according to one of the preceding claims, **characterized in that** the armature blocks (2) each have a cutout (8) which extends in the longitudinal direction of the annular arrangement (15) at least over a partial length of the armature block (2), preferably over the entire length of the armature block (2).

6. Rotor according to Claim 5, **characterized in that** the cutout (8) is arranged substantially centrally on the armature block (2).

7. Rotor according to one of the preceding claims, **characterized in that** two adjacent armature blocks (2), on the mutually facing sides, have at least in each case one lug (9) radially on the outer and inner side with respect to the annular arrangement (15), said lug surrounding the magnet (3) which is arranged therebetween.

8. Rotor according to Claim 7, **characterized in that** the lugs (9) extend in the longitudinal direction of the annular arrangement (15) in each case at least over a longitudinal section of the armature block (2), preferably over the entire length of the armature block (2) .

9. Rotor according to one of the preceding claims, **characterized in that** each of the armature blocks (2) is formed from a large number of stamped metal sheets which are put together to form the armature block (2).

10. Rotor according to one of the preceding claims, **characterized in that** the rotor core (6) has cutouts (10) which are arranged in a manner distributed over the circumference, for the purpose of saving weight.

11. Rotor according to one of the preceding claims, **characterized in that** the end side (5) of the rotor (1) has cutouts (11, 11*) which are arranged in a manner distributed over the circumference in the region of the armature blocks (2) and of the magnets (3), wherein some of the cutouts (11*) in the end side (5) correspond to the cutouts (8) in the armature blocks (2).

12. Electric motor for use in a throttle valve actuator for an internal combustion engine, wherein the electric motor has a rotor (1) according to one of Claims 1 to 11.

13. Actuator comprising an electric motor according to Claim 12.

14. Vehicle comprising an actuator according to Claim 13 or an electric motor according to Claim 12.

15. Method for producing a rotor according to one of Claims 1 to 11, in which method, in a first step, armature sections which are formed as individual armature blocks (2) and individual magnets (3) are put together by means of an assembly table (12) to form a substantially annular arrangement (15), wherein the individual armature blocks (2) and magnets (3) are alternately put together to form the annular arrangement (15), wherein a magnet (3) is arranged between two adjacent armature blocks (2),
and
in which method, in a second step, a supporting plastic structure is added by means of a plastic encapsulation, wherein a rotor core (6) is formed from plastic, the individual armature blocks (2), on their inner side which faces a rotor centre axis (Y-Y), being anchored in said rotor core at least by means of a plurality of anchoring means (2*) which are arranged in a manner distributed at equal distances in relation to one another over the length of an associated armature block (2), wherein all of these anchoring arrangements (2*) are surrounded by the plastic compound of the rotor core 2 during the plastic encapsulation.

16. Method according to Claim 15, wherein the individual armature blocks (2) are placed onto fixing pins (14) which are fitted in the assembly table (12), for fixing purposes.

17. Method according to Claim 15 or 16, wherein the individual armature blocks (2) and magnets (3) are alternately put together one after the other to form the annular arrangement (15).

18. Method according to one of Claims 15 to 17, wherein at least one end side (5) is further formed by the plastic encapsulation, said end side, together with the rotor core (6), forming a supporting and integral plastic structure.

19. Method according to Claim 18, wherein individual injection-moulded sections (7) are further formed by the plastic encapsulation, said individual injection-moulded sections filling slots (4) on the outer side of the rotor (1), said slots being formed by in each case two adjacent armature blocks (2) in conjunction with the magnet (3) which is arranged between them, and covering said slots with respect to the outside, wherein the respective injection-moulded sections (7), together with the rotor core (6) and the end side (5), form the supporting and integral plastic structure.

20. Method according to one of Claims 15 to 19, wherein the assembly table (12) is formed in a manner split into two or more parts in order to premount two or more assembly table parts (16) with individually put-together armature blocks (2) and magnets (3) in a complementary manner, wherein the premounted assembly table parts (16) are put together to form the annular arrangement (15).

21. Method according to one of the preceding claims, wherein the plastic structure formed terminates flush with the respective outer sides of the armature blocks (2) .

22. Method according to one of the preceding claims, wherein a shaft and/or a hub (17) are/is also encapsulated when forming the plastic structure.

23. Method according to one of the preceding claims, wherein after curing of the plastic structure, in a third step, the rotor (1) is removed from the assembly table (12) and then withdrawn from a correspondingly used injection mould.

## Revendications

1. **Rotor** d'un moteur électrique, comprenant plusieurs sections d'induit, qui sont configurées sous la forme de blocs d'induit séparés individuels (2), plusieurs aimants (3),
les blocs d'induit (2) et les aimants (3) étant assemblés individuellement et en alternance en un agencement essentiellement annulaire (15) et un aimant (3) étant agencé respectivement entre deux blocs d'induit voisins (2),
un noyau de rotor (6) et
un surmoulage de matière plastique,
le noyau de rotor (6) étant formé en matière plastique par le surmoulage de matière plastique,
**caractérisé en ce que**
les blocs d'induit individuels (2) comprennent plusieurs ancrages (2*) en forme d'œillet sur leur côté intérieur tourné vers un axe médian de rotor (Y-Y), qui sont répartis à des distances constantes les uns des autres sur la longueur d'un bloc d'induit associé (2), tous ces ancrages (2*) étant enchâssés par la masse de matière plastique du noyau de rotor (6) dans l'état surmoulé du rotor 1, de telle sorte qu'ils forment une complémentarité de forme solide avec le noyau de rotor (6) .

2. Rotor selon la revendication 1, **caractérisé en ce qu'**en outre au moins un côté frontal (5) est formé par le surmoulage de matière plastique, qui forme conjointement avec le noyau de rotor (6) une structure moulée par injection porteuse et d'un seul tenant.

3. Rotor selon la revendication 1 ou 2, **caractérisé en ce qu'**en outre des sections moulées par injection individuelles (7) sont formées par le surmoulage de matière plastique, qui remplissent des rainures (4) agencées sur le côté extérieur du rotor (1) et recouvrent les rainures (4) vers l'extérieur, les rainures (4) étant formées par à chaque fois deux blocs d'induit voisins (2) en connexion avec les aimants (3) agencés entre eux, les sections moulées par injection (7) formant conjointement avec le noyau de rotor (6) et le côté frontal (5) la structure moulée par injection porteuse et d'un seul tenant.

4. Rotor selon l'une quelconque des revendications précédentes, **caractérisé en ce que** le moyen d'ancrage (2*) est configuré en forme d'œillet.

5. Rotor selon l'une quelconque des revendications précédentes, **caractérisé en ce que** les blocs d'induit (2) présentent chacun un évidement (8), qui s'étend dans la direction longitudinale de l'agencement annulaire (15) au moins sur une longueur partielle du bloc d'induit (2), de préférence sur la longueur totale du bloc d'induit (2).

6. Rotor selon la revendication 5, **caractérisé en ce que** l'évidement (8) est agencé essentiellement au milieu du bloc d'induit (2).

7. Rotor selon l'une quelconque des revendications précédentes, **caractérisé en ce que** deux blocs d'induit voisins (2) comprennent, sur les côtés tournés l'un vers l'autre, au moins à chaque fois un bec (9) radialement sur le côté extérieur et sur le côté intérieur au regard de l'agencement annulaire (15), qui enchâsse les aimants (3) agencés entre eux.

8. Rotor selon la revendication 7, **caractérisé en ce que** les becs (9) s'étendent dans la direction longitudinale de l'agencement annulaire (15) à chaque fois au moins sur une section longitudinale du bloc d'induit (2), de préférence sur la longueur totale du bloc d'induit (2) .

9. Rotor selon l'une quelconque des revendications précédentes, **caractérisé en ce que** chacun des blocs d'induit (2) est formé par une pluralité de tôles poinçonnées, qui sont assemblées en le bloc d'induit (2) .

10. Rotor selon l'une quelconque des revendications précédentes, **caractérisé en ce que** le noyau de rotor (6) comprend des évidements (10) répartis sur la périphérie pour l'économie de poids.

11. Rotor selon l'une quelconque des revendications précédentes, **caractérisé en ce que** le côté frontal (5) du rotor (1) comprend des évidements (11, 11*) répartis sur la périphérie dans la zone des blocs d'induit (2) et des aimants (3), certains des évidements (11*) du côté frontal (5) correspondant aux évidements (8) des blocs d'induit (2) .

12. **Moteur électrique** destiné à être utilisé dans un organe de commande de clapet d'étranglement pour un moteur à combustion, le moteur électrique comprenant un rotor (1) selon l'une quelconque des revendications 1 à 11.

13. **Actionneur** muni d'un moteur électrique selon la revendication 12.

14. **Véhicule** muni d'un actionneur selon la revendication 13 ou d'un **moteur électrique** selon la revendication 12.

15. **Procédé de fabrication d'un rotor** selon l'une quelconque des revendications 1 à 11, selon lequel, **dans une première étape,** au moyen d'une table de montage (12), des sections d'induit configurées sous la forme de blocs d'induit individuels (2) et des aimants individuels (3) sont assemblés en un agencement essentiellement annulaire (15), les blocs d'induit individuels (2) et les aimants (3) étant assemblés en alternance en l'agencement annulaire (15), un aimant (3) étant agencé entre deux blocs d'induit voisins (2), et
selon lequel, **dans une deuxième étape,** une structure en matière plastique porteuse est ajoutée par un surmoulage de matière plastique, un noyau de rotor (6) étant formé en matière plastique, dans lequel les blocs d'induit individuels (2) sont ancrés au niveau de leur côté intérieur tourné vers un axe médian de rotor (Y-Y) au moyen de plusieurs ancrages (2*), qui sont répartis sur la longueur d'un bloc d'induit associé (2) à des distances constantes les uns des autres, tous ces ancrages (2*) étant enchâssés par la masse de matière plastique du noyau de rotor 2 lors du surmoulage de matière plastique.

16. Procédé selon la revendication 15, dans lequel les blocs d'induit individuels (2) sont emboîtés sur des goupilles de fixation (14) disposées sur la table de montage (12) pour la fixation.

17. Procédé selon la revendication 15 ou 16, dans lequel les blocs d'induit individuels (2) et les aimants (3) sont assemblés successivement en alternance en l'agencement annulaire (15).

18. Procédé selon l'une quelconque des revendications 15 à 17, dans lequel en outre au moins un côté frontal (5) est formé par le surmoulage de matière plastique, qui forme conjointement avec le noyau de rotor (6) une structure en matière plastique porteuse et d'un seul tenant.

19. Procédé selon la revendication 18, dans lequel en outre des sections moulées par injection individuelles (7) sont formées par le surmoulage de matière plastique, qui remplissent des rainures (4) sur le côté extérieur du rotor (1), qui sont formées par à chaque fois deux blocs d'induit voisins (2) en connexion avec les aimants (3) agencés entre eux, et les recouvrent vers l'extérieur, les sections moulées par injection respectives (7) formant conjointement avec le noyau de rotor (6) et le côté frontal (5) la structure en matière plastique porteuse et d'un seul tenant.

20. Procédé selon l'une quelconque des revendications 15 à 19, dans lequel la table de montage (12) est configurée sous forme divisée en deux ou plus, afin de prémonter de matière complémentaire deux parties de table de montage ou plus (16) avec des blocs d'induits (2) et aimants (3) assemblés individuellement, les parties de table de montage (16) prémontées étant assemblées pour la formation de l'agencement annulaire (15) .

21. Procédé selon l'une quelconque des revendications précédentes, dans lequel la structure en matière plastique formée se termine en affleurement avec les côtés extérieurs respectifs des blocs d'induit (2).

22. Procédé selon l'une quelconque des revendications précédentes, dans lequel un arbre et/ou un moyeu (17) sont également surmoulés lors de la formation de la structure en matière plastique.

23. Procédé selon l'une quelconque des revendications précédentes, dans lequel, après un durcissement de la structure en matière plastique, **dans une troisième étape,** le rotor (1) est enlevé de la table de montage (12) et retiré d'un moule de moulage par injection utilisé de manière appropriée.
